# EUROPEAN PATENT APPLICATION

(11) **EP 4 607 255 A1**
(43) Date of publication of application: **27.08.2025**
(21) Application number: 24159506.5
(22) Date of filing: 23.02.2024
(51) Int. Cl.: G02B 6/26, G02B 6/32, G02B 6/38

(54) **OPTICAL CONNECTOR WITH THREE-DIMENSIONALLY PRINTED COUPLING SURFACE**

(71) Applicant: Neutrik AG, 9494 Schaan (LI)
(72) Inventor: ZÜGER, Benno, 9472 Grabs (CH)
(74) Representative: Kaminski Harmann

(57) **Abstract**

The invention relates to a method for shaping a coupling surface (25) of an optical fiber (2) mounted in a plug-in connector such that a pose of a mounted portion of the optical fiber is fixed relative to the connector is fixed. The method comprises (i) determining (92) actual transmission data of the optical fiber (2) by an optical beam (8) passing through the coupling surface (25), (ii) deriving alignment data of the mounted portion with respect to a reference frame of the connector (1) based on the actual transmission data and (ii) modifying (91) a shape of the coupling surface (25) by a three-dimensional printing (910) method on the basis of the alignment data.

## Description

### FIELD OF THE INVENTION

The present invention relates to a manufacturing of a plug-in connector, in particular shaping a coupling surface of an optical fiber. The invention further relates to the structure of plug-in connectors comprising optical fibers.

### BACKGROUND OF THE INVENTION

Unlike to electrical connectors, where sufficient contact can be achieved practically independently of the relative pose of the respective wires, optical connectors need precise alignment relative to each other to ensure the required signal quality. This means that the coupling surfaces of the corresponding fibers must be oriented to each other both longitudinally, laterally, angularly (tilt), and depending on the fiber type, e.g., for multicore or polarization maintaining fibers, also rotationally.

One way to achieve said alignment is the so-called physical contact connection (PCC). PCC-s are characterized by the physical mating of two optical fibers. Precision ceramic ferrules are typically utilized for PCC-s and the connection is accomplished by terminating the optical fiber into the ferrule. Epoxy is used to affix the fiber into the ferrule. The tip of the ceramic ferrule is polished in a precise manner to ensure that light enters and exits at a known trajectory with little scattering or optical loss. Polishing the terminated ceramic ferrule is a critical process in PCC-s. However, as the performance of the PCC depends on the direct contact of the fiber ends this technology is very sensitive to the surface quality. On the other hand, direct contact is achieved by mechanically pressing the fibers against each other, thus scratches and other form of debris are almost inherently caused during the establishment and de-establishment of the PCC. The lateral centration of the two ferrules at a PCC is achieved by using ceramic slit sleeves.

Alternatively, the connection between the fibers might be realized by an air gap. The so-called expanded beam connectors (EBC) are a practical realization of this concept. EBC typically use two lenses to expand, collimate, and then refocus the light from the transmitting fiber into the receiving fiber. EBCs are less prone to signal loss due to contamination at the optic interface. The lens design also facilitates cleaning and because the light path travels over an airgap, there is no physical contact. Lack of physical contact potentially eliminates the mechanical wear found in PCC, allowing more connector mating cycles.

Similar to PCCs, EBCs typically use precision ceramic ferrules to align the fiber to the lens. As with PCCs, tight tolerance ceramic ferrules are used in conjunction with high quality termination and polishing procedures. The connector shell, insert, or specific mounting parts aligning the ferrule to the lens, are critical subcomponent in enabling low-loss EBCs. Combining precision subcomponents and ceramics with the proper termination and polishing procedures can yield EBC with consistent insertion loss (IL) values less than 1.0 dB.

By way of example single core fibers have a core diameter of a few micrometers. Thus, the alignment of the fibers to the projection lenses must be performed with a precision in the range of micrometers regarding the lateral position and in the range of arc minutes regarding the tilt. Prior art positioning is based on ex-situ alignment, wherein the fibers and/or the lenses are mounted according to a theoretical value. I.e., any correction of an eventual misalignment is a cumbersome procedure, even if such misalignment is discovered during the manufacturing process.

### OBJECT OF THE INVENTION

In view of the above circumstances, an object of the present invention is to provide an efficient method of providing the coupling surface of optical fibers.

A further aim of the present invention is to reduce the precision requirements, and thus the labor involved, in aligning the fibers to the connector, by providing a post-processing step.

These objectives are at least partly achieved by realizing the characterizing features of the independent claims. Features, which further develop the invention in an alternative or advantageous manner are described in the dependent patent claims.

### SUMMARY OF THE INVENTION

The present invention relates to a method for shaping a coupling surface of an optical fiber of a plug-in connector. Plug-in in the sense of the invention relates to the intended mode of operation of the connectors, i.e., that the mating between two connectors is releasable. Plug-in connectors in the sense of the invention also comprise connectors intended for a later use as built-in connectors. The coupling surface is the interface to couple light into or outcouple light from the optical fiber. Said coupling might be performed through an intermediate airgap. While the present invention is not limited to these embodiments, an intermediate element, e.g., an aspheric or ball lens glued to, cemented to or pressed against the fiber, is often used for providing the coupling surface. Unless expressly provided optical fibers in the sense of the present invention are to be understood to comprise both embodiments: with and without such intermediate elements. When a distinction is appropriate, the fiber without the intermediate element is referred to as the "optical fiber" and the fiber with the intermediate element is referred to as the "optical fiber assembly.".

The plug-in connector, particularly data connector, has an alignment portion. The alignment portion defines the reference frame of the connector. Said reference frame comprises a transmission axis of the connector, i.e., the direction into which the connector expected to transmit the light coupled out via the coupling surface. The alignment portion is configured to provide communicative coupling to a mating connector.

The optical fiber is mounted in the connector such that a pose of a mounted portion of the optical fiber relative to the connector is fixed during the performing of the method. In other words, the inventive method is primarily seen as post-mounting procedure. Optical fiber in the sense of the present invention means fibers configured for data communication or any light transmission, e.g., also for laser or power transmission. Auxiliary elements such as ferrules, unless expressly provided otherwise, are to be understood as a part of the optical fiber. Although, as will be shown, the present invention is particularly suited for thin, single core fibers, due to its straightforward post-mounting nature, it is applicable to all types of optical fibers configured for data communication or any light transmission, e.g., also for laser or power transmission. In particular the present invention is equally applicable to single and multimode fibers, single core, multicore and hollow core fibers.

The connector might comprise a single optical fiber or a set of optical fibers. Moreover, the connector might also comprise electrical connecting elements configured for data or power transfer, or guide elements. In other words, the present invention is also applicable with hybrid connectors. The set of optical fibers might be realized as a plurality of essentially individual fibers or as an array. The present invention, with suitable adaptations, is applicable to both cases. For transparency reasons many specific or optional features of the invention will be presented in combination with only specific embodiments. This shall not be construed in a limiting fashion, and the disclosed specific features can be combined with each other in a reasonable manner.

The method comprises (i) determining actual transmission data of the optical fiber by an optical beam passing through the coupling surface, wherein the optical beam is at least partly aligned to a transmission axis of the connector, (ii) deriving alignment data of the mounted portion with respect to a reference frame defined by the alignment portion based on the actual transmission data, wherein the alignment data comprises fiber tilt data regarding a tilt angle of the mounted portion and fiber position data regarding a lateral position of the mounted portion and (iii) changing the shape of the coupling surface by a three-dimensional printing method based on the alignment data.

The fiber tilt corresponds to a misalignment of the mounted portion of the optical fiber from the transmission axis of the connector. For embodiments with fiber assemblies comprising intermediate elements the tilt might arise due to a misalignment of the fiber - i.e., without intermediate element - or from the intermediate element. If the misalignment is within reasonable limits the effect caused by these misalignments are similar and the treatment steps are also essentially the same.

The optical beam in the sense of the invention imitates a real communication signal. I.e., the transmission axis of the connector corresponds to a direction of incoming light or outgoing light under anticipated operation of the connector. In particular the actual transmission data of the fiber is monitored and improved in the mounted state of the fiber. Due to this post-mounting correction the precision requirements of the mounting/aligning are relaxed which improves the efficiency of the workflow.

Three-dimensional printing in the sense of the present invention includes both additive and subtractive methods. By way of example specific aspects of the invention are shown in combination with additive three-dimensional printing methods. The invention is nevertheless applicable with subtractive methods, with corresponding adaptation.

In some embodiments, the three-dimensional printing is embodied as an additive printing method. More particularly the three-dimensional printing is based on a two-photon polymerization process. Such non-linear two-photon absorption phenomenon is known to create solid 3D-printed structure from a photoactivable material. The photo-material is transparent at the wavelength used, however, at the focal spot only, the photo-material can absorb simultaneously two photons in a very small volume called "voxel". A chemical reaction starts, and the liquid monomer becomes a solid polymer inside the voxel, which can be in the submicrometer range, more particularly ~0.1 µm in diameter. This means that the printing can be realized with fine steps. Moreover, due to the additive nature of the process the original physical fiber end, respectively the lens of the optical fiber assembly, is not destroyed thus reject rate of the method can be kept low.

Regarding photoactive materials, the skilled person can make use of many principally suitable photoactive materials. A non-exhaustive list includes the product UpPhoto^{®}, UpDraft, UpBrix, UpSol, UpOpto from UpNano GmbH; IP-S, IP-Q, IP-Visio, IP-n162, IP-L from Nanoscribe GmbH; OrmoComb^{®} from Micro resist technology GmbH.

In some embodiments, the connector is mounted on a tiltable frame and transmission axis of the connector is aligned with respect of the reference system of the printing machine. The transmission axis of the connector is established by determining a reference surface, i.e., a plane orthogonal to it and corresponding to a physical marker of the connector. A tilt of the reference plane is compensated by the tiltable frame.

In some embodiments, the three-dimensional printing is performed by a surface modifying beam. The surface modifying beam and the optical beams might be embodied as laser beams.

In some embodiments, the method is performed as a progressive, more particularly a parallel or an iterative processing. In the parallel processing determining the actual transmission data is performed during modifying the shape of the coupling surface. In the iterative processing the actual transmission data is determined at least before and after the modifying step. The method can be also performed as a sequential process, wherein the actual transmission data measured only once, before modifying the coupling surface.

In some embodiments, the method is configured to at least partially compensate a deviation of the actual transmission data from a target transmission.

In some specific embodiments of the method, the target transmission data corresponds to an insertion loss of 2.5 dB or lower. In other words, the inventive method provides a completely aligned fiber comparable in performance with the conventionally manufactured fibers, respectively fiber assemblies. Further steps, in particular coating of the coupling surface, might be performed subsequently. In some specific embodiments, the shape of the coupling surface is aspherical in the finished state.

In some embodiments, the method comprises a coating of the finished coupling surface. In some specific embodiments, the coating is an anti-reflective coating. The effects of coating are three-fold for the coupling surface. Anti reflective coatings, as the name suggests, improve the transmission of the coupling surface. Moreover, typical three-dimensional printing materials are hygroscopic, and a swelling of the printed layer might take place following the exposure to humidity. By coating the surface with inorganic hard materials, e.g., SiOₓ the water uptake from the air can be prevented. In addition, the hard ceramic anti-reflective coatings improve scratch resistance and the mechanical properties of the coupling surface in general.

In some embodiments, the connector comprises an intermediate element configured to provide an initial coupling surface of the optical fiber. The initial coupling surface is configured to be processed by the three-dimensional printing method. The method further comprises a mounting of the intermediate element for providing the initial coupling surface of the optical fiber. In other words, the intermediate element, by way of example a projection lens for an EBC, is attached in a step that basically directly precedes the surface shaping step. Alternatively, the connector, respectively the optical fiber assembly, might be assembled in another location and the surface shaping is performed in the packaged state.

In some specific embodiments, the mounting of the intermediate element comprises one of a gluing, cementing, or curing the intermediate element to the optical fiber. The above list shall not be construed as a waiving of further specific mounting methods. Other embodiments of the invention might be realized, e.g., by pressing the intermediate element against the rest of the fiber. Moreover, the intermediate element might also be mounted to the mounting part.

In some specific embodiments, the method is configured to be performed on a single core optical fiber. Since only a coarse pre-alignment is required, the inventive method is especially suited to provide an efficient workflow for providing, respectively correcting, the coupling surface of a single core fiber. Nevertheless, the inventive method is not restricted to single core fibers, but applicable to multicore and/or hollow-core fibers.

In some specific embodiments of the method, a misalignment of a transmission pattern of the finished coupling surface from a corresponding transmission axis of the connector is below 1° and 20 µm, and/or the intermediate element is embodied as a beam expanding/focusing element. It is clear that for single core fibers a combination of these features is especially beneficial.

In some embodiments, the method is configured to be performed on a connector having a set of optical fibers and a common intermediate element common to at least a subset of the set of optical fibers. The method comprises shaping the corresponding coupling surface of the optical fibers independently from the further fibers of the subset of optical fibers. By way of example the set of optical fibers might be a bundle in an array, e.g., rectangular or honeycomb array, and the intermediate element might be a flat plane. More particularly the connector might be an MPO-type connector. Owing to the method individual projection lenses, as coupling surfaces, could be provided on the flat plane. Said projection lenses can be provided respecting the actual alignment of the fibers in the connector.

The present invention also relates to a connector configured to accommodate an optical fiber and provide a communication connection with a corresponding mating connector. The connector comprises (a) an alignment portion, (b) a mounting part, and (c) a coupling surface.

By way of example the connector will be described as a data connector. Data connector in the sense of the invention might be configured to accommodate at least one optical fiber. The inventive connector might be foreseen to accommodate a plurality of optical fibers and/or further accommodate electric data or power connections.

The alignment portion defines the reference frame of the connector. The reference frame comprises a transmission axis of the connector. The alignment portion is configured to provide communicative coupling to the mating connector.

The connector might also comprise a housing. The housing might comprise centering and/or fastening, in particular clamping, features to establish a mechanical connection with the mating connector. The housing also comprises a rear part configured to accommodate a data cable comprising one or more optical fibers. The housing might comprise electrostatic or electromagnetic shielding and/or strain relief elements.

The mounting part is configured to provide a mounted portion of the optical fiber. A pose of the mounted portion is invariant relative to the connector. Said mounted portion also defines a fiber tilt, which represents an initial projection direction of the fiber as compared to the transmission axis of said fiber relative to the transmission axis of the connector. The mounting part might be the same physical component as the alignment portion or comprised by the latter.

The coupling surface is configured to project light transmitted by the optical fiber to a transmission pattern of the fiber. The transmission pattern of the fiber is aligned to the transmission axis of the connector. The coupling surface is shaped in a mounted state of the fiber by an in-line three-dimensional printing according to an embodiment of the inventive method. In particular said coupling surface is provided by in situ determining a transmission axis of said fiber and providing a correction optics such that the transmission pattern of the fiber is aligned to the transmission direction of the connector.

In some embodiments, the connector comprises an intermediate element, in particular a ball or an aspherical lens. The intermediate element comprises a core zone having a first face facing the fiber and a second face in the side opposite of the fiber. The intermediate element is configured to provide the coupling surface on the second face. In other words, the connector is an EBC type.

In some particular embodiments, the intermediate element (i) is glued, cemented, or cured to the optical fiber with a first face or pressed against the optical fiber by a spring force, and/or (b) comprises a printed zone being formed on the second face, in particular by a two-photon polymerization process, and being configured to provide the coupling surface. The printed zone is formed from a material different from the material of the core zone.

In some embodiments, the connector is configured to accommodate a set of optical fibers. The connector comprises (i) a set of mounting parts each configured to provide mounted portion of one of the fibers from the set of optical fibers, in particular the mounting parts and the fibers are correspondingly associated, (ii) a set of coupling surfaces each configured to project light transmitted by the corresponding optical fiber to the respective transmission patterns of the fibers, and (iii) a first centering part aligned to the transmission axis of the connector and being configured to define an orientation of the connector with respect the mating connector by mechanically interacting with a centering counterpart of the mating connector. Each of the transmission patterns are aligned to the transmission axis of the connector.

In some specific embodiments, the connector comprises a plurality of ball or aspheric lenses. Each of said lenses are distinct from the further lenses. Each of the lenses are correspondingly associated with one of the coupling surfaces. By way of example such connectors might be realized similarly to FIBERFOX EBC15 4CH or opticalCON Dragonfly from Neutrik AG, PL-230 Expanded beam connectors from Rosenberger OSI, Diamond X-BEAM from Diamon SA or MXC^{®} Expanded Beam from US Conec Ltd.

In specific embodiments, the connector is configured to accommodate a set of optical fibers. The connector comprises (a) a common mounting part configured to provide mounted portion of each of the fibers from the set of optical fibers, (b) a common intermediate element, particularly embodied as a plane parallel plane, and (c) a plurality of coupling surfaces each configured to project light transmitted by the corresponding optical fiber to respective transmission patterns of the fibers. The plurality of coupling surfaces is formed on the common intermediate element by in-line three-dimensional printing. In other words, as compared to the previously described embodiments, wherein a plurality of intermediate elements is correspondingly assigned to the respective fibers, in these embodiments a common intermediate element common to all of the fibers are used. By way of example this arrangement is typically used, when many fibers must be contacted, e.g., in the case of an MPO-24 connector.

In some embodiments the optical fiber is embodied as a single core fiber.

In some embodiments the connector comprises at least one electric data and/or at least one power connections. In other words, the connector is a hybrid, more particularly a hermaphrodite hybrid connector. By way of example such connectors might be realized similarly to LKO HYBRID OPTICAL + POWER CONNECTORS from Link USA Inc., S-Lite^{™} Expanded Beam Connectors from from Bel Fuse Inc., or Hybrid Kabelsysteme from Solifos AG.

### BRIEF DESCRIPTION OF THE DRAWINGS

By way of example only, specific embodiments of the invention will be described more fully hereinafter with reference to the accompanying figures, wherein:
Figure 1 depicts the schematics of a generic plug-in connector with an optical fiber mounted in it.
Figure 2 depicts the effect of arising from a properly and improperly shaped coupling surface of an EBC.
Figure 3 schematically depicts some examples of three-dimensional printing processes in the sense of the invention.
Figure 4a schematically depicts an embodiment of the method, wherein determining the actual transmission data, deriving the fiber alignment and modifying the shape of the coupling surface is performed sequentially.
Figure 4b depicts schematically an embodiment of the method, wherein the actual transmission data determined in parallel with the modifying the shape of the coupling surface.
Figure 5 schematically depicts a provision of a plurality of coupling surfaces on a common intermediate element.
Figure 6 schematically depicts, by a flowchart, some aspects of a sequential embodiment of the method.
Figure 7 schematically depicts, by a flowchart, some aspects of an iterative embodiment of the method.

### SPECIFIC EMBODIMENTS OF THE INVENTION

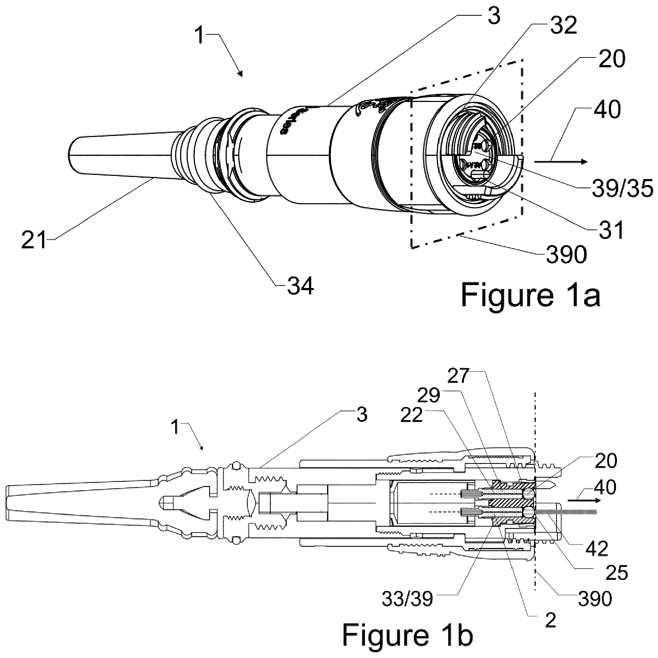

Figure 1a shows schematically a generic plug-in connector **1** configured to accommodate an optical fiber. The connector **1** comprises a housing **3**, a main body acting as the alignment portion **39** defining a reference frame of the connector **1**, e.g., by a transmission axis **40** of the connector **1** and a reference plane **390**. In the depicted embodiment the face **35** of the main body **39** is configured to act as an interface for the mating connector, i.e., proper signal transmission can be achieved by contacting the respective faces **35**. Transmission axis **40** in the sense of the present invention can be understood as a direction corresponding to a relative direction towards the mating connector configured to receive the light from the connector **1**. By way of example the reference plane **390** is selected to be a plane perpendicular to the transmission axis **40** and comprising the transmission element, i.e., the fiber ends or projection elements. Alternatively, the reference plane **390** might relate to a specific geometric or functional feature of the main body **39**, particularly the face **35** of the main body, or the housing **3**. Since the main body **39** can be considered rigid with respect to the forces experienced during the performance of the inventive method and/or the proper usage of the connector **1** these choices are equivalent.

The housing **3** and/or the main body **39** provides a mechanical and communicative coupling to the corresponding mating connector (not shown). In the depicted embodiment a first centering part **31**, depicted as a pin, is aligned to transmission axis **40** and defines an orientation of the connector **1** by mechanically interacting with a centering counterpart of the mating connector. The depicted connector comprises guiding or clamping elements **32** configured to interact with corresponding elements on the mating connector. The connector also comprises a strain relief **34** and a recess configured to accommodate a cable **21** comprising a further section of the optical fiber. By way of example the depicted connector **1** is configured to accommodate four optical fibers.

Figure 1b show a cross section of the connector **1**, with some components relevant for the understanding of the invention highlighted. The connector **1** comprises a main body as alignment portion **39**, and a housing **3** as an external protection. The main body **39** defines reference frame of the connector **1**, e.g., as the transmission axis **40** and the reference plane **390** of the connector **1**. The connector **1** comprises a mounting part **33** configured to accommodate the fiber **2** (only a partly shown). In the depicted embodiment the main body **39** acts as the common mounting part configured to mount a mounted portion **22** of the optical fibers **2**. A pose of a mounted portion **22** of the optical fiber **2** is invariant relative to the connector **1**, particularly the transmission direction **40** and the reference plane **390** of the connector **1**. The ferrules **29** are considered to be a part of the optical fiber **2** in the sense of the invention.

The coupling surface **25** of the optical fiber **2** is provided by corresponding intermediate elements **20,** in the depicted embodiment ball lenses. In other words, the depicted connector **1** is an EBC type. The coupling surface **25** projects light transmitted by the optical fiber **2** to a transmission pattern **42** of the fiber. The transmission pattern **42** of the fiber **2** is aligned to the transmission axis **40** of the connector **1**. To achieve this the intermediate element **20** and the mounted portion **22** of the fiber **2** must be aligned with high precision. In particular the tolerances for single core fiber in the lateral direction are 1 µm or less and in the tilt are 1 arc minute or less. The depicted intermediate element **20** and the mounted portion **22** of the fiber **2** are glued **27** together, e.g., by an epoxy resin. Alternatively or additionally, the intermediate element **20** might pressed against the optical fiber **2** by a spring force. Spacers and/or index-matching components might also be located between the intermediate element **20** and the fiber **2**.

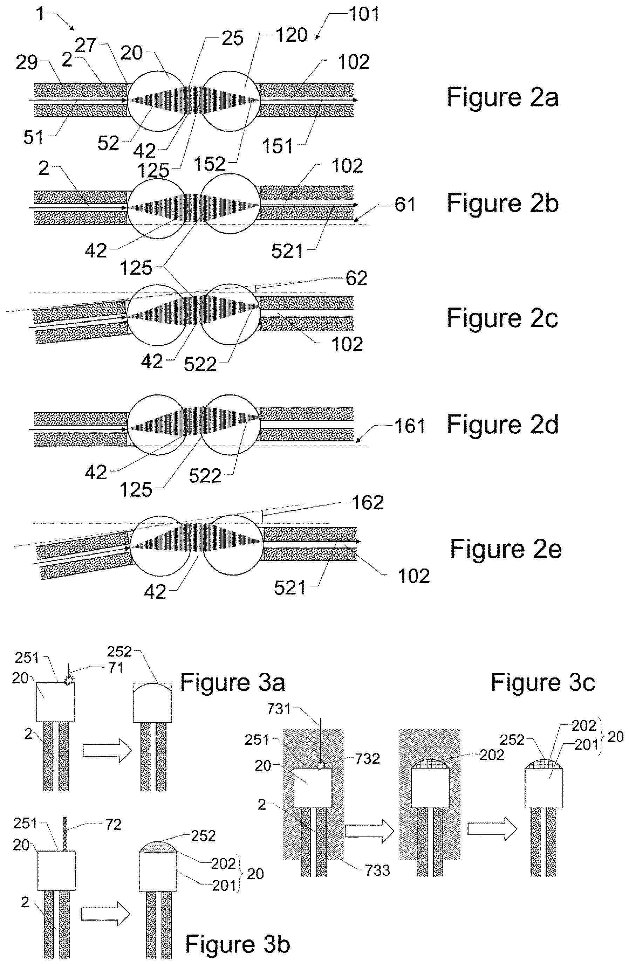

Figure 2 schematically depicts a connection between a fiber **2** in EBC type connector **1** with a mating fiber **102** in a mating connector **101**. The two connectors **1,101** comprise identical components, wherein the same filling pattern represents an equivalent component. Only the relevant optical components are shown. The fibers **2,102** are encased with respective ferrules **29**. The coupling surface **25** is provided by an intermediate element **20**, depicted as a ball lens, e.g., glued **27** to the fiber **2,102** respectively to the ferrules **29**.

Figure 2a shows a case, wherein the optical components **2,20,102,120** are well aligned. The light transmitted **51** by the fiber enters the intermediate element **20**, where it is expanded **52** and projected to the airgap according to the transmission pattern **42** of the fiber **2** by the coupling surface **25**. The mating coupling surface **125** of the mating fiber **102** collects the light and projects **152** it, via the respective intermediate element **120** to the mating fiber **102**. The light is then transmitted **151** by the mating fiber **102**.

Figures 2b and 2c depicts a lateral **61** and angular (tilt) misalignments **62** of the respective coupling surfaces **25,125**. In these examples said misalignment is caused by a misalignment of the fiber assemblies. Figured 2d and 2e depicts examples wherein a respective lateral **161** and angular misalignment **162** exists between the fiber **2** and the intermediate element **20**. Due to the misalignment **61,62,161,162** the mating coupling surface **125** is not aligned with the transmission pattern **42**, thus the light is projected **521** partially offset to the mating fiber **102**, which could cause loss of intensity. In the worst case the light is not projected **522** at all into the fiber **102.** Especially critical is the lateral misalignment **161** between the fiber **2** and the intermediate element **20** and the tilt misalignment **62** of the fiber assemblies.

Figure 3 depicts some examples of three-dimensional printing methods in the sense of the invention. By way of example a fiber assembly comprising an intermediate element **20**, depicted as a cylinder with flat faces, and a fiber **2** glued, cured, cemented, or pressed together. While further components of the connector are not shown for transparency reasons the fiber assembly is mounted such that a pose of a mounted portion of the optical fiber **2** is invariant relative to the connector. The components are depicted out of scale to better visualize the inventive concept.

Figure 3a depicts a subtractive method, namely a direct etching by an etching beam **71**. The etching beam can be an optical beam, particularly laser beam, an ion beam, an electron beam, or any other type suitable for lithography. Due to an interaction with the etching beam **71**, as the surface modifying beam, an initial coupling surface **251** is transformed into a finished state **252** of the coupling surface. Alternatively, or additionally to the depicted dry etching step wet etching steps might also be performed, particularly in combination with selective laser etching/melting, or optical grinding.

Figure 3b depicts an additive method, based on a particle beam **72**, as surface modifying beam, of coating material and/or coating precursor material on the initial coupling surface **251**. The resulting intermediate element **20** comprises a core zone **201**, and a printed zone **202** on the face of the core zone **201** opposite of the fiber **2**. The finished state **252** of the coupling surface is provided by the printed zone **202**. While not mandatory the material properties, particularly the chemical and optical properties, of printed zone **202** are typically differing from the core zone **201**. Unlike to a coating, which might also be applied to the printed or edged zone **202**, the thickness of printed zone **202** is not negligible as compared to the core zone **201**. Particularly the printed zone might be 150 µm thick as compared to the few 100 nm thickness of typical optical coating. Moreover, said thickness of the printed zone **202** is deliberately non-uniform to provide the required change of the coupling surface from the initial **251** to the finished state **252**.

Figure 3c depicts an alternative additive method based on a sol-gel process. The fiber assembly is immersed in a precursor fluid **733**, and an intense and highly focused laser beam **731**, as surface modifying beam, is applied such that at the focal spot **732** only, the precursor fluid **733** absorbs simultaneously two photons in a very small volume called "voxel". A chemical reaction starts, and the precursor fluid **733** becomes a solid polymer inside the voxel which can be in the submicrometer range, more particularly ~0.1 µm in diameter. The resulting intermediate element **20**, similarly to the case depicted in Figure 3b, comprises a core zone **201**, and a printed zone **202** on the face of the core zone **201** opposite of the fiber **2**. The finished state **252** of the coupling surface is provided by the printed zone **202**. The key advantage of this method is the fine granularity, enabling a precise control of the finished state **252** of the coupling surface.

The skilled person understands that the depicted methods represent a non-exclusive list illustrating some aspects of the inventive method. Although some preferred embodiments of the method and connector of the invention may be associated with certain three-dimensional printing techniques, there is no fundamental limitation, and other embodiments of method and connector may be combined with any suitable three-dimensional printing technique. In addition, the use of specific fiber assemblies to illustrate the aspects shown in Figures 2 and 3 is for brevity and clarity only, and these figures are not intended to be limiting.

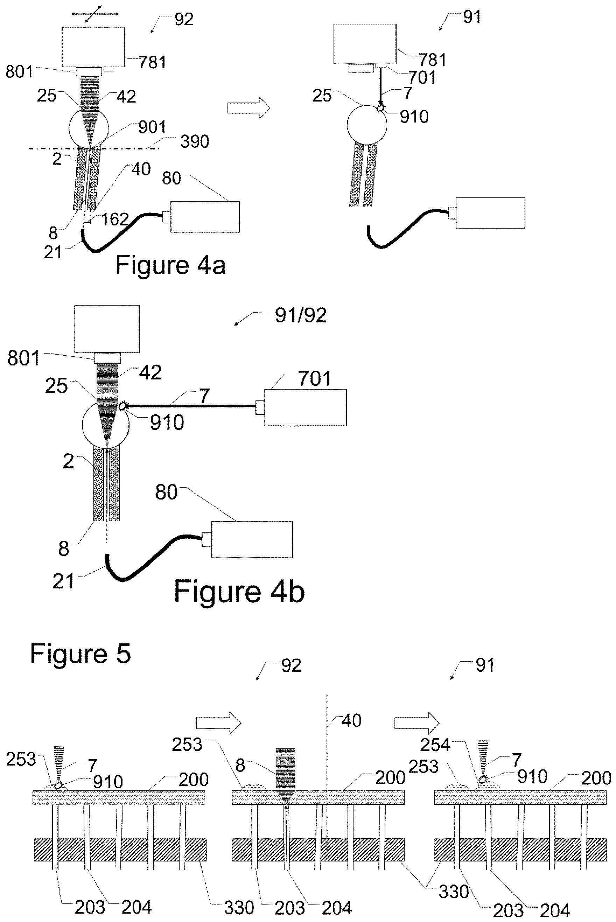

Figure 4a illustrates a first embodiment of the inventive method for shaping a coupling surface **25** of an optical fiber **2**. In the first step actual transmission data of the optical fiber **2** by an optical beam **8** passing through the coupling surface **25** is determined **92**. While not shown explicitly the alignment of the optical fiber **2** is derived based on the actual transmission data. The alignment data comprises a tilt angle **162** of the fiber **2** with respect to the transmission axis **40** of the connector and data regarding a lateral position **901** of the fiber end with respect to a reference plane **390** of the connector. The depicted tilt is exaggerated.

In the depicted embodiment the optical beam **8** for measuring the transmission data is provided by a light source source **80**, e.g. a laser, coupled to a distal endpoint of the cable **21** comprising a further section of the optical fiber. The coupling surface **25** projects the optical beam **8** according to the actual transmission pattern **42** of the fiber **2.** The target transmission pattern (not shown) is aligned to a transmission axis **40** of the connector (no further components are shown). The actual transmission pattern **42** is collected by a detector **801** providing actual transmission data of the optical fiber is **2**. The detector is mounted to the same positioning system **781** with fixed spatial relationship to the surface modifying beam source **701**.

In the next step a modifying **91** of the shape of the coupling surface **25** by a three-dimensional printing **910** method is performed based on the alignment, respectively the actual transmission data of the fiber. The three-dimensional printing **910** is performed via surface modifying beam **7**, provided by a surface modifying beam source **701**. The depicted surface modifying beam source **701** is mounted to positioning system **781** allowing at least a lateral scanning of the coupling surface **25** by the surface modifying beam **7**.

Figure 4b depicts a second embodiment of the inventive method based on a continuous or parallel realization of monitoring **92** and modifying **91** the coupling surface **25**. In the depicted embodiment the acquisition of the actual transmission data is performed similarly to the first embodiment depicted in Figure 4a. The optical beam **8** is provided by the laser source **80** coupled to a distal endpoint of the cable **21**. The actual coupling surface **25** provides the actual transmission pattern **42** which is collected by a detector **801** providing actual transmission data of the optical fiber is **2**.

The three-dimensional printing **910** is performed via surface modifying beam **7**, provided by a surface modifying beam source **701**. Said laser source **701** is mounted independently from the detector **801**. If the area directly affected by the three-dimensional printing **910** is small, then the actual transmission data could be reasonable collected during the operation of the surface modifying beam **7**. The advantage of this embodiment is the in-situ observation of the coupling surface **25** during the three-dimensional printing **910**. In other words, a time-efficient shaping of the coupling surface **25** can be realized. Alternatively, the surface shaping might be performed iteratively, i.e. in a modifying phase **91** only surface modifying beam **7** is projected, while in a monitoring phase **92** only the optical beam **8** is projected.

The embodiments of the method shown in Figure 4a and 4b represent only particular examples. The features of said embodiments are reasonably combinable with each other. Substantially equivalent alternative solutions are also within the sense of the present invention. Particularly any of the depicted or suitable alternative beam source **80,701** and detector **801** arrangements - or sufficient alternatives - is applicable with any one of the sequential (Figure 4a), parallel (Figure 4b) or iterative embodiments. Moreover, while performing the inventive method as an unbroken process offers some benefits, nothing prevents the introduction of a break, e.g., removing the connector from the printing machine to perform further manufacturing or testing steps. The method can be reestablished at a later stage, e.g., by performing an initial determining step.

Figure 5 on the left panel schematically depicts a portion of connector configured to accommodate a set of optical fibers **203,204**. The fibers might comprise the respective ferrules, reflective coating etc. The connector comprises a common intermediate element **200**, embodied as a plane parallel plane, and a common mounting part **330** configured to provide mounted portion of each of the fibers **203,204**. By way of example some **204** of depicted fibers **203,204** are not aligned with the transmission direction **40** of the connector.

In the left panel a corresponding coupling surface **253** is provided for one of the fibers **203** by a three-dimensional printing **910** using a surface modifying beam **7**. When the finished stage of said coupling surface **253** is reached the next step commence as shown in the middle panel. For transparency reasons the beam sources and the detector are not shown, they might be realized in a manner shown in Figure 4a, 4b or any suitable alternative manner.

The middle panel shows the determining **92** actual transmission data of the next optical fiber **204** by an optical beam **8** passing through a pre-finished state of the coupling surface, in this case the untreated common intermediate element **200**. The optical beam **8** is aligned to a transmission axis **40** of the connector.

The right panel shows modifying **91** the shape of the corresponding coupling surface **254** by a three-dimensional printing **910** method based on the alignment data. Since the alignment of the fibers **203,204** is different, the finished surface of the corresponding coupling surfaces **253,254** is also different. In other words, the inventive method enables an individual correction of the misalignment of the fibers **203,204.** This is advantageous as the requirements of the alignment during the mounting of the fibers are relaxed.

By way of example Figure 5 depicts a serial production/modification of the respective coupling surface, however this embodiment was selected for transparency reasons only. The invention can be realized in a partly, e.g., row-by-row, or completely parallelized fashion.

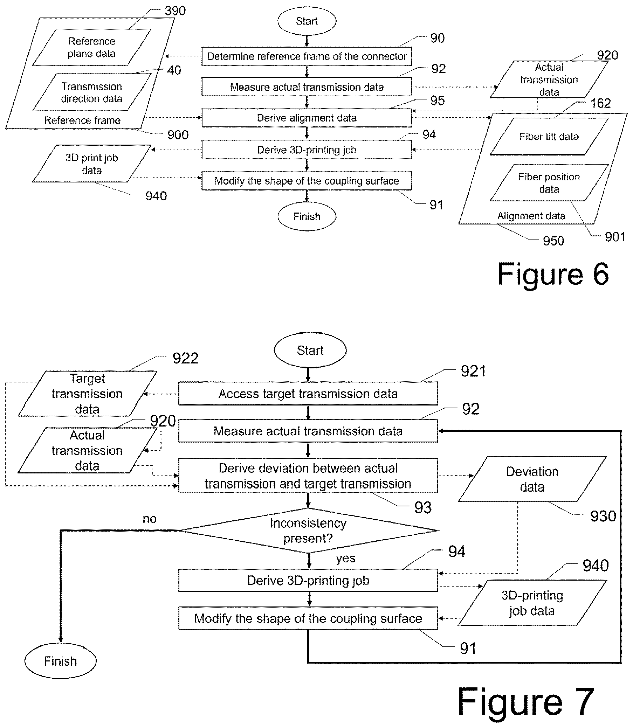

Figure 6 illustrates the steps of a sequential embodiment of the method, i.e., similar to the case depicted in Figure 4a, by a flowchart. Command/flow-lines show as bold and data-lines as dashed arrows. The skilled person understands that the depicted flowcharts focus on the essential features of the claimed invention and the actual embodiments comprise further, non-depicted elements, in particular command or data elements and/or data transfer lines. Moreover, command or data modules might be depicted in a simplified form due to reasons of clarity and conciseness. Unless where otherwise provided, or where a distinction provides a notable effect the data elements and the related real-world objects are labelled with the same reference signs.

In the first step the reference frame **900**, e.g., the reference plane **390** and transmission direction **40** of the connector is determined **90**. This can be performed e.g., by known state of the art methods. This is followed by measuring **92** the actual transmission data **920**, e.g., as depicted in Figure 4a. Based on the actual transmission data **920** the alignment **950** of the fiber, respectively the fiber assembly, in the reference frame **900** of the connector is derived **95**. Said alignment **950** particularly comprise fiber tilt data **162** and fiber position data **901**, e.g., as depicted in Figure 2. Based on the alignment data **950** the print job **940** is derived **94** and executed **91**. While not explicitly shown the skilled person understands that one or more of the described steps also at least implicitly refers to the type/geometry of the connector.

One aim of the above-described method is to print a lens in a precise position based on the fiber core center **901** and angular deviation **162** from the desired axis direction **40**. Said deviations can occur due to skewed fibers **162** or skewed connector interfaces. The more inaccurate the tolerance specifications are, the greater these deviations are, but they can be compensated for by this process. This means that the requirements for the precision of the insert, the ferrule and the fiber can be significantly reduced, i.e., they can be produced more cost-effectively.

Figure 7 shows by a high-level flowchart some aspects of an iterative processing of the coupling surface, based on modified processing principles. The features of this processing method, with some straightforward modifications are transferable to the sequential or parallel processing variants.

In a first step target transmission data **922** is accessed **921**. The target transmission data corresponds to a finished state of the coupling surface. Finished in the sense of the invention might mean that its transmission characteristics are according to the specifications of the final product. Alternatively, finished state might represent the specifications of an intermediate, e.g., pre-coated, product. Unless special circumstances so demand, no further changes in shape or alignment changing steps are expected after the finished state has been reached.

The processing comprises measuring **92** the actual transmission data **920** and deriving **93** a deviation **930** between the actual **920** and target transmission **922**. If the actual transmission data **920** is still not according to the specification a three-dimensional printing job **940** is derived **94** based on the deviation **930**. The three-dimensional printing job **940** might represent a single step correction of the inconsistency **930** but can equally represent an incremental correction causing the actual transmission **920** to approach the target **921**. After modifying **91** the shape of the coupling surface based on the three-dimensional printing job **940** the actual transmission **920** is measured **92** again, i.e., the modification **91** of the coupling surface is performed progressively.

By way of example Figure 7 depicted an embodiment based on an unbroken, iterative process. This embodiment was selected for transparency reasons only. The inventive method can be performed in many alternative manners. A non-exclusive list includes (i) a continuously monitoring during the three-dimensional printing, (ii) pausing the method for performing further analysis, (iii) alternative determination of the printing job, (iv) realizing the depicted or a suitable alternative workflow under partial or complete manual control by an operator.

Although the invention is illustrated above, partly with reference to some specific embodiments, it must be understood that numerous modifications and combinations of different features of the embodiments can be made. All these modifications lie within the scope of the appended claims.

## Claims

1. A method for shaping a coupling surface (25,253,254) of an optical fiber (2,203,204) of a plug-in connector (1) having an alignment portion (39), wherein the optical fiber (2,203,204) is mounted in the connector (1) such that a pose of a mounted portion (22) of the optical fiber (2,203,204) relative to the connector (1) is fixed during the performing of the method, the method comprising
- determining (92) actual transmission data (920) of the optical fiber (2,203,204) by an optical beam (8) passing through the coupling surface (25,253,254), wherein the optical beam (8) is at least partly aligned to a transmission axis (40) of the connector (1),
- deriving (95) alignment data (950) of the mounted portion (22) with respect to a reference frame (900) defined by the alignment portion (39) based on the actual transmission data (920), wherein the alignment data (950) comprises fiber tilt data regarding a tilt angle of the mounted portion (22) and fiber position data regarding a lateral position (901) of the mounted portion (22),
- modifying (91) a shape of the coupling surface (25,253,254) by a three-dimensional printing (910) method based on the alignment data (950).

2. The method of claim 1, wherein the three-dimensional printing (910) is based on a two-photon polymerization process.

3. The method of any one of the preceding claims, wherein the three-dimensional printing (910) is performed by a surface modifying beam (7), in particular wherein the surface modifying beam (7) and the optical beam (8) are embodied as laser beams.

4. The method of any one of the preceding claims, wherein the method is performed as a progressive, more particularly a parallel or iterative processing, wherein in the parallel processing the determining (92) of the actual transmission data (920) is performed during the modifying (91) the shape of the coupling surface (25).

5. The method according to any one of the preceding claims, wherein the method is configured to at least partially compensate for a deviation (930) of the actual transmission data (920) from a target transmission (922).

6. The method of claim 5, wherein the target transmission data (922) correspond to an insertion loss of 2.5 dB or less, in particular wherein the shape of the coupling surface (25,253,254) is aspherical in a finished state (252).

7. The method of any one of the preceding claims further comprising a coating on a finished coupling surface (252), in particular by an anti-reflective coating, more particularly wherein the anti-reflective coating is further configured to provide improved scratch-resistance and/or improved watertightness and/or reduced water take up with respect to the uncoated surface.

8. The method of any one of the preceding claims, wherein
- the connector (1) comprises an intermediate element (20) configured to provide an initial coupling surface (251) of the optical fiber (2,203,204), wherein the initial coupling surface (251) is configured to be processed by the three-dimensional printing (910) method,
- the method further comprises a mounting the intermediate element (20) for providing the initial coupling surface (251) of the optical fiber (2,203,204),
in particular wherein, the mounting the intermediate element (20) comprises one of a gluing, cementing, or curing the intermediate element (20) to the optical fiber (2,203,204) or to the mounting part (33).

9. The method of claim 8 being configured to be performed on a single core optical fiber (2,203,204), in particular wherein
- a misalignment of a transmission pattern (42) of a finished coupling surface (252) from a corresponding transmission axis (40) of the connector (1) is below 1° and 20 µm, and/or
- the intermediate element (20) is embodied as a beam expanding/focusing element, in particular a ball or aspherical lens.

10. The method of claim 8, wherein the method
- is configured to be performed on a connector (1) having a set of optical fibers (2,203,204) and a common intermediate element (200) common to at least a subset of the set of optical fibers (2,203,204), and
- comprises shaping the corresponding coupling surface (25,253,254) of the optical fibers (2,203,204) independently from the further fibers (2,203,204) of the subset of optical fibers (2,203,204).

11. A plug-in connector (1) configured to accommodate an optical fiber (2,203,204) and provide a communication connection with a mating connector (101), wherein the connector (1) comprises
- an alignment portion (39) defining the reference frame (900) of the connector (1), the reference frame comprises a transmission axis (40) of the connector (1), the alignment portion (39) being configured to provide communicative coupling to the mating connector (101),
- a mounting part (33) being configured to provide a mounted portion (22) of the optical fiber (2,203,204), wherein a pose of the mounted portion (22) is invariant relative to the connector (1),
- a coupling surface (25,253,254) being configured to project light transmitted by the optical fiber (2,203,204) to a transmission pattern (42) of the fiber (2,203,204), wherein the transmission pattern (42) of the fiber (2,203,204) is aligned to the transmission axis (40) of the connector (1),
**characterized in that**
the coupling surface (25,253,254) is shaped in a mounted state of the fiber (2,203,204) by an in-line three-dimensional printing (910) method according to any one of the claims 1 to 10.

12. The connector (1), in particular a data connector, according to claim 11, wherein the connector comprises an intermediate element (20), in particular a ball or an aspherical lens, wherein the intermediate element (20)
- comprises a core zone (201) having a first face facing the fiber (2,203,204) and a second face in the side opposite of the fiber (2,203,204), and
- is configured to provide the coupling surface (25,253,254) on the second face,
in particular wherein the intermediate element (20)
- is glued (27), cemented, or cured to the optical fiber (2,203,204) with a first face or pressed against the optical fiber (2,203,204) by a spring force, and/or
- comprises a printed zone (202) being formed on the second face, in particular by a two-photon polymerization process, and being configured to provide the coupling surface (25,253,254),
in particular wherein the optical fiber (2,203,204) is embodied as a single core fiber.

13. The connector (1) according to any one of the claims 11 to 12, wherein the connector is configured to accommodate a set of optical fibers (2,203,204), wherein the connector (1) comprises
- a set of mounting parts (33) each configured to provide mounted portion (22) of one of the fibers (2,203,204) from the set of optical fibers (2,203,204), in particular wherein the mounting parts (33) and the fibers (2,203,204) are correspondingly associated,
- a set of coupling surfaces (25,253,254) each configured to project light transmitted by the corresponding optical fiber (2,203,204) to the respective transmission patterns (42) of the fibers (2,203,204), and
- a first centering part (31) aligned to the transmission axis (40) of the connector (1) and being configured to define an orientation of the connector (1) with respect the mating connector (101) by mechanically interacting with a centering counterpart of the mating connector (101), wherein each of the transmission patterns (42) are aligned to the transmission axis (40) of the connector (1),
in particular wherein the connector (1) comprises a plurality of ball or aspheric lenses, each distinct from the further lenses and correspondingly associated with one of the coupling surfaces (25,253,254).

14. The connector (1) according to claim 11 being configured to accommodate a set of optical fibers (2,203,204), wherein the connector (1) comprises
- a common mounting part (330) configured to provide mounted portion (22) of each of the fibers (2,203,204) from the set of optical fibers (2,203,204),
- a common intermediate element (200), particularly embodied as a plane parallel plane,
- a plurality of coupling surfaces (25,253,254) each configured to project light transmitted by the corresponding optical fiber (2,203,204) to respective transmission patterns (42) of the fibers (2,203,204), wherein the plurality of coupling surfaces (25,253,254) is formed on the common intermediate element (200) by in-line three-dimensional printing (910).

15. The connector (1) according to any one of claims 11 to 14, wherein the connector further comprises at least one electric data and/or at least one power connections.
